# EUROPEAN PATENT APPLICATION

(11) **EP 3 757 824 A1**
(43) Date of publication of application: **30.12.2020**
(21) Application number: 19182596.7
(22) Date of filing: 26.06.2019
(51) Int. Cl.: G06F 17/27

(54) **METHODS AND SYSTEMS FOR AUTOMATIC TEXT EXTRACTION**

(71) Applicant: Siemens Healthcare GmbH, 91052 Erlangen (DE)
(72) Inventor: YEREBAKAN, Halid Ziya, Malvern, PA 19355 (US)
(74) Representative: Patentanwälte Bals & Vogel

(57) **Abstract**

The invention disclosed herein relates to a computer-implemented method (100) for extracting relevant text information from a text document, a system and a computer readable medium for extracting relevant text information from a text document. The method comprises configuring a processor of a computer system to receive (101) a free text document, specify (103) text information to be extracted from the free text by a user, and extract (107) relevant text information from the converted document using at least one pattern comprising commands that identify the relevant text information to be extracted from the converted document based on the specified text information.

## Description

### Technical Field

The present invention relates to automatic extraction of text information from a text document.

### Background

With the volume of textual information provided in unstandardized textual documents ever increasing, there is a need for effective and efficient methods of extracting relevant text portions provided in a particular text document.

For example, in the field of biomedical sciences there is often a need to extract information from unstandardized textual documents, such as medical text reports provided by medical doctors. For example, medical doctors often provide medical reports that provide information without any standardized wording. Thus, various words in various languages may be used in these reports to describe relevant information, such as a particular symptom, for example.

It is known to use rule-based extraction algorithms that are based on a set of specified and, therefore, very limited rules, such as regular expressions. Since the discrete nature of words in text data limits an ability of regular expressions to generalize to word alternatives, a rule-based system may not cover all words that are used for a particular set of relevant information, such that some relevant information may not be extracted and, therefore, is lost.

It is therefore desirable to provide for accurate information extraction methods that enable a reliable and/or precise extraction of relevant information from a medical report.

According to a first aspect of the present invention, there is provided a computer-implemented method for extracting relevant text information from a text document, wherein the method comprises configuring a processor of a computer system to carry out the following steps:
receiving a free text document, by a receiving unit, for example, specifying text information to be extracted from the free text by a user, using an interface, for example, and
extracting relevant text information from the converted document using at least one pattern comprising commands that identify the relevant text information to be extracted from the converted document based on the specified text information, using an extraction unit, for example. According to the method disclosed herein, a first set of commands is specified by at least one first meta tag as a rule-based system for extracting first relevant text information, and a second set of commands is specified by at least one second meta tag using a link to a set of commands determined by a machine learning algorithm for extracting second relevant text information based on the specified text information. The method further comprises: generating a document comprising the extracted relevant text information according to the specified text information for each pattern, and presenting the document comprising the extracted relevant text information on an output unit.

In the context of the present disclosure, relevant information are information extracted from a text that are linked to particular specified information, which are specified by a user.

In the context of the present disclosure, a rule-based system is a system that makes use of a strict and pre-determined set of rules, wherein the rules of the strict set of rules are specified by a user, for example. A rule-based based system may be based on lemmatization and stemming, for example. In particular, the rule-based system may be based on a so-called "Context Free Grammar", which specifies regulations independent from a context of particular information to be extracted.

In the context of the present disclosure, a machine learning algorithm may be defined as a procedure that recognizes patterns in input data. In particular, a machine learning algorithm may be defined as a classifier that automatically associates a particular feature, such as a word or a set of characters, with a class, such as a semantic phrase. A machine learning algorithm may use computational power of a processor to carry out classifications at a level of complexity, speed and precision that is beyond human capability.

In the context of the present disclosure, a meta tag is a set of commands that specifies information to be extracted from a text document. A meta tag may comprise commands that make reference to another meta tag. Meta tags extend a generalization of context free grammars via lexicons, other patterns, normalization, permutation, or supervised classifiers.

In the context of the present disclosure a command may be a set of instructions that cause a processor to carry a number of operations that are specified by the command.

In the context of the present disclosure, a pattern may be a set of commands that are used to configure a processor of a computer system to carry out an algorithm for extracting relevant information specified in the pattern by using strict commands and/or meta tags. A pattern may comprise commands that make reference to another pattern and, thereby, include commands specified in the other pattern.

For classification purposes, a free text document may be converted into word embeddings comprising a vector representing the corresponding word in a multidimensional space, using a conversion unit, for example.

Optionally, the machine learning algorithm according to the method disclosed herein is a pre-trained machine learning algorithm that has been trained using training data comprising: a number of input words, a number of word embeddings associated with a respective one of the number of input words, each word embedding comprising a vector representing the respective one of the number of input words in the multidimensional space, and a number of ground truth labels, wherein each ground truth label is associated with a respective one of the number of input words, and each ground truth label indicates an association of the respective input word with a given class representing the specified text information.

Optionally, commands specified by the at least one first meta tag are commands for stemming and/or lemmatization of the specified text information.

Optionally, commands specified by the at least one first meta tag comprise a pre-determined list of similar text information for the specified text information for identification of the relevant text information.

Optionally, commands specified by the at least one first meta tag comprise a pre-determined list of similar text information for the specified text information for identification of the relevant text information.

Optionally, commands determined by the machine learning algorithm comprise a pre-trained word list determined in a previous training for the specified text information.

Optionally, the at least one first meta tag specifies a command to generalize every word out of the free text to a canonical word token according to the specified text information.

Optionally, the document comprising the specified text information according to the extracted relevant text information is transmitted to an automatic search algorithm that displays the document comprising the specified text information according to the extracted relevant text information in response to a search command comprising the text information to be extracted from the free text, provided by a user.

Optionally, converting the free text document into word embeddings is carried out by a set of commands specified by the at least one first meta tag and/or by the at least one second meta tag.

Optionally, a parse tree is generated based on the extracted relevant text information, wherein the parse tree comprises the extracted relevant text information according to all meta tags of a particular pattern.

Optionally, generating the document comprises automatically incorporating the extracted relevant text information into a text template at a pre-determined position in the text template.

Optionally, the pattern comprises a command that loads at least one pre-determined pattern comprising at least one meta tag.

Optionally, the method comprises obtaining the specified text information according to the extracted relevant text information label via a graphical user interface.

Optionally, a particular pattern comprises at least one sub-pattern, each sub-pattern comprising at least one first meta tag and/or at least one second meta tag.

According to a second aspect of the present invention, there is provided a system comprising a processor and a memory, wherein the memory comprises a computer program comprising instructions, which when the program is executed by the processor, cause the processor to carry out the steps according to the method according to the first aspect of the present invention disclosed herein, wherein the system comprises a receiving unit configured for receiving free text documents from the memory, a user interface configured for specifying text information to be extracted from the free text document by a user, a conversion unit configured for converting each word of the free text document into word embeddings comprising a vector representing the word in a multidimensional space, an extraction unit configured for extracting relevant text information from the converted document using at least one pattern comprising commands that identify the relevant text information to be extracted from the converted document based on the specified text information, wherein the commands are specified by at least one first meta tag as a rule-based system for extracting first relevant text information, and wherein the commands are specified by at least one second meta tag using a link to a set of commands determined by a machine learning algorithm for extracting second relevant text information based on the specified text information. The system further comprises a generic unit configured for generating a document comprising the extracted relevant text information according to the specified text information for each pattern, and an output unit configured for presenting the document comprising the extracted relevant text information.

According to a third aspect of the present invention, there is provided a computer readable medium having instructions stored thereon which, when executed by a computer, cause the computer to perform the method according to the first aspect.

### Brief Description of the Drawings

- Figure 1: is a flow chart illustrating schematically a method according to an example;
- Figure 2: shows a pattern comprising first meta tags and second meta tags, according to an example;
- Figure 3: shows a result of an algorithm that uses the pattern as shown in Figure 2, according to an example;
- Figure 4: shows a template using the pattern as shown in Figure 2, wherein the template is used to generate a standardized textual document, according to an example;
- Figure 5: shows a flow chart illustrating schematically a method, according to another example; and
- Figure 6: shows an illustration of a system, according to an example.

### Detailed Description

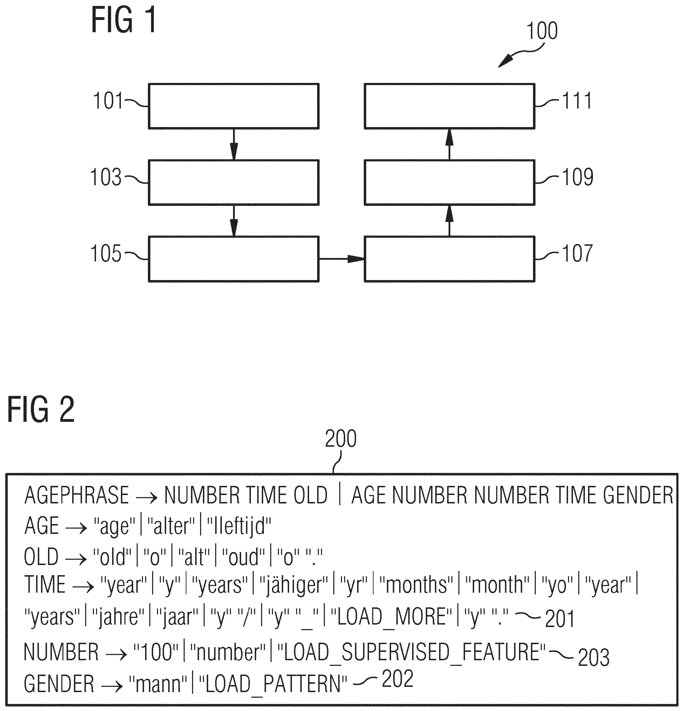

Referring to Figure 1, there is illustrated a computer-implemented method for extracting relevant text information from a text document, wherein the method comprises configuring a processor of a computer system to carry out the following steps: receiving a free text document, specifying text information to be extracted from the free text by a user, converting the free text document into word embeddings comprising a vector representing the corresponding word in a multidimensional space, and extracting relevant text information from the converted document using at least one pattern comprising commands that identify the relevant text information to be extracted from the converted document based on the specified text information. According to the method disclosed herein, a first set of commands is specified by at least one first meta tag as a rule-based system for extracting first relevant text information, and a second set of commands is specified by at least one second meta tag using a link to a set of commands determined by a machine learning algorithm for extracting second relevant text information based on the specified text information. The method further comprises: generating a document comprising the extracted relevant text information according to the specified text information for each pattern, and presenting, which includes for example displaying, the document comprising the extracted relevant text information on an output unit.

In the following description, various specific details are set forth such as examples of specific components, devices, methods, etc., in order to provide a thorough understanding of implementations of the present invention.

While the present invention is susceptible to various modifications and alternative forms, specific embodiments thereof are shown by way of example in the drawings and will herein be described in detail. It should be understood that certain method steps are delineated as separate steps; however, these separately delineated steps should not be construed as necessarily order dependent in their performance.

Unless stated otherwise as apparent from the following discussion, it will be appreciated that terms such as "segmenting," "generating," "registering," "determining," "aligning," "positioning," "processing," "computing," "selecting," "estimating," "detecting," "tracking" or the like may refer to the actions and processes of a computer system, or similar electronic computing device, that manipulates and transforms data represented as physical, for example electronic, quantities within the computer system' s registers and memories into other data similarly represented as physical quantities within the computer system memories or registers or other such information storage, transmission or display devices. The method described herein may be implemented using computer software or a computer program conforming to a recognized standard, wherein sequences of instructions designed to implement the method can be compiled for execution on a variety of hardware platforms and for interface to a variety of operating systems.

The method according to the first aspect of the present invention in general relates to a computer-implemented method for extracting relevant text information from a text document using a hybrid method that consists of first meta tags that are rule-based and second meta tags that are based on a machine learning algorithm, such as an artificial neural network, for example. By using rule-based meta tags in combination with machine learning based meta tags, relevant text information may be extracted by very specific rules that are defined by the first meta tags and by very generous patterns that are identified in a training process based on annotated data, for example. The hybrid character of the present method generalizes regular expressions and Context Free Grammars using word vectors and machine learning technology by using meta tags.

According to the method disclosed herein, a first set of commands to specify a first meta tag and a second set of commands is used to specify a second meta tag. The first set of commands may comprise the following commands: "LOAD_PATTERN", which uses an existing pattern in another pattern. The "LOAD_PATTERN" command may be a rule-based command.

Further, a "LOAD_MORE" command may be used, which adds words similar to a particular relevant information, to a given word list, based on word embeddings. The "LOAD_MORE" command may be based on word embeddings and, therefore, may be based on machine learning.

The second set of commands may comprise the following commands:
"LOAD_SUPERVISED_FEATURE", which loads a pre-trained word list, i.e. a word list that has been determined in a training based on annotated data, or word classifier that has been determined in a training based on annotated data. The "LOAD_SUPERVISED_FEATURE" command may be based on machine learning. A "LOAD_WORD" command may also be used, which generalizes every word out of a vocabulary of a particular text to be analysed to the canonical word token "word". The "LOAD_WORD" command may be a rule-based command for normalization. Additionally, a command "LOAD_PERMUTATION" may be used that adds different permutations in a rule-based approach. Thus, by using a first set of commands and a second set of commands, the hybrid character of the present method is implemented, as the first set of commands is related to rule-based commands and the second set of commands is related to machine learning based commands.

The present method, in general, makes use of so-called patterns, which are sets of rules for identifying relevant information in a textual document to be analysed. A pattern may comprise a number of first meta tags and/or second meta tags.

The at least one machine learning algorithm according to the present method may be trained on a number of training data that have been annotated by human users to provide for a ground truth in order to optimize the at least one machine learning algorithm. Thus, the at least one machine learning algorithm may make use of so-called "transfer learning", which is to use at least a part of information gained by a first classifier that has been optimized using a first set of data for generating a second classifier that is optimized for classification of a second set of data. For this purpose, the second classifier may comprise information, such as one or more layers, for example, from the first classifier. Thus, the present method provides generalization of rule-based systems without having any additional training data. It utilizes the transfer learning ideas to be able to bootstrap a different task from an original task. In this way, without having any additional training, it is possible to generalize rule-based systems and to scale Context Free Grammar to numerous patterns.

In general, two different user types are using the present invention - pattern designers, who design patterns and use meta tags and context free grammar and who configure a system. Further, a final user uses pre-given patterns to carry out a final task of processing information extraction from given text.

The present method is in particular useful to extract information from different medical reports. Additionally, it can be used for other domains if extraction of structured text from unstructured text is needed. The present method may actively be used in text analysis algorithms for extraction of information from a text including for example: malignancy score, smoking status and pack per year, lab values, lesion measurement and so on.

The method disclosed herein, in general, is based on a conversion of a free text document, which may comprise a number of symbols, such as characters, for example into word embeddings which may be interpreted by a machine learning algorithm, such as an artificial neural network in particular a so-called long short-term memory artificial neural network.

According to the present invention, it may be determined whether particular information from a textual document is linked with a specified information or not using a rule-based approach that is based on strict pre-defined rules and/or a machine learning approach that is based on rules defined by a machine learning algorithm.

By extracting relevant text information using a machine learning algorithm the present method reduces the burden of manually modifying regular expressions using a rule-based approach.

In some examples, the machine learning algorithm is a pretrained machine learning algorithm that has been trained using training data comprising a number of input words, a number of word embeddings associated with a respective one of the number of input words, each word embedding comprising a vector representing the respective one of the number of input words in the multidimensional space, and a number of ground truth labels. Each ground truth label may be associated with a respective one of the number of input words, and each ground truth label indicates an association of the respective input word with a given class representing the specified text information.

As used herein, word embeddings may be mappings of individual words or a set of words of a textual document onto real-valued vectors representative thereof in a multidimensional vector space. Each vector may be a dense distributed representation of the word or the set of words in the vector space. Word embeddings may be learned/generated to provide that a word or a set of words that have a similar meaning have a similar representation in vector space.

As used herein, word embeddings may be learned using machine learning techniques. Word embeddings may be learned/generated for characters of a textual document. Word embeddings may be learned/generated using a training process applied on the textual document. As an example, pretrained word embeddings may be downloaded from online websites. The training process may be implemented by a deep learning network, for example based on a neural network. For example, the training may be implemented using a Recurrent Neural Network (RNN) architecture, in which an internal memory may be used to process arbitrary sequences of inputs. For example, the training may be implemented using a Long Short-Term Memory (LSTM) based Recurrent Neural Network (RNN) architecture, for example comprising one or more LSTM cells for remembering values over arbitrary time intervals, and/or for example comprising gated recurrent units (GRU). The training may be implemented using a convolutional neural network (CNN). Other suitable neural networks may be used.

In some examples, the commands specified by the at least one first meta tag are commands for stemming and/or lemmatization of the specified text information.

Using stemming and/or lemmatization, a precise set of rules may be provided for identification of particular relevant information.

In some examples, commands specified by a first meta tag comprise a pre-determined list of similar text information for specified text information for identification of the relevant text information.

Relevant information to be extracted from a textual document may be determined using a pre-determined word list such as synonyms or acronyms or any other form of relations to a particular specified text information.

In some examples, a document comprising specified text information according to extracted relevant text information, i.e. a generated document, is transmitted to an automatic search algorithm that displays the document in response to a search command comprising the text information to be extracted from the free text, provided by a user.

An automatic search algorithm that makes use of a document comprising the specified text information according to the extracted relevant text information may find more general information concerning the specified text information than a search algorithm that merely uses the specified text information as such.

In some examples, a parse tree is generated based on the extracted relevant text information, wherein the parse tree comprises the extracted relevant text information according to all meta tags of a particular pattern.

A parser or a parse tree may be used to generate a document in a standardized form using relevant information extracted from one or more textual documents. Thus, a parser may combine information from a plurality of textual documents in one document.

In some examples, generating structured data or information extraction, such as a document by using a parser, for example, may comprise automatically incorporating relevant text information into a text template at a pre-determined position in the text template.

By using text templates to refer to particular relevant text information by including a reference to a pattern or a meta tag, for example, extracted relevant information automatically is provided in a standardized form and may be used for automatic processing in the future.

In some examples, the at least one pattern comprises a command that loads at least one pre-determined pattern comprising at least one meta tag.

By using a pattern that makes reference to another pattern, a pattern may be created that is generous by using pre-trained information included in the other pattern, for example and that is precise by using a strict set or rules included in yet another pattern, for example.

In some examples, the method comprises obtaining specified text information according to extracted relevant text information label via a graphical user interface.

A graphical user interface may provide for control symbols that configure a computer system to carry out all steps according to the present method to generate a document comprising relevant information for a specified information.

The graphical user interface may be used as an edit interface that is designed to simplify pattern edits and that comprises at least the following control elements: a save button that saves edits provided by a user, a reload button that discards changes in data provided by a user, a combo box that selects a particular pattern to edit, and a pattern text box that contains an actual generalized pattern in text form.

Examples of the edit interface may comprise a set of strings on which a pattern edit is to be executed. Once the save button is pressed, a processor calculates statistics and reports accuracy for the set of strings.

The edit interface may comprise a test part, which shows a single input testing part. After entering an example and clicking the test button, it will show all possible parsing trees and subtrees for the example.

The edit interface may further comprise a similar words section, which comprises a search button for getting more words to a given word.

The similar words section may use word embeddings to find a list of matching candidates.

Further, a label correction may be provided that may be used to correct errors that appear during use of the present invention. In order to fix these errors, labels may be added or removed using a menu in the graphical user interface. For this purpose, supervised classifiers could be trained with these labels to be used by the "LOAD_SUPERVISED_FEATURE" command, for example.

Fig. 1 is a flow chart 100 illustrating an embodiment of the present method.

In a receiving step 101, a free text document is received by a processor configured to carry out all steps of the present method. A free text document may be any textual document, such as a medical report.

In particular, a free text document may be a medical report handwritten by a medical doctor, which has been analysed using an optical character recognition (OCR) algorithm and which has been transmitted to the processor.

In a specification step 103, a user submits specified text information that is to be extracted from the free text document using a graphical user interface, for example. The user may generate a pattern comprising commands for identifying relevant information, which is linked with the specified text information. Thus, the pattern may comprise rules or commands that specify relations of particular sets of information in the free text document to the specified text information, such that not only information is extracted from the free text document that is identical to the specified text information but also information is extract from the free text document that is related to the specified text information.

In a conversion step 105, the free text document received in the receiving step 101 is converted into word embeddings. Thus, every word or a selected number of words of the free text document is converted into word embeddings. The conversion step 103 may be initialized using a meta tag. Alternatively, the conversion step may be carried out automatically after the free text document has been received in receiving step 101.

In an extraction step 107, relevant text information is extracted from the converted document using the word embeddings generated in step 105. The relevant text information to be extracted from the converted document are specified by a pattern, which comprises commands that identify the relevant text information to be extracted based on the specified text information acquired in step 103.

The pattern may be generated automatically according to the specified text information acquired in step 103. Alternatively, the pattern may be generated by the user in step 103.

The pattern may comprise two sets of commands, wherein a first set of commands is specified by at least one first meta tag as a rule-based system for extracting first relevant text information. Thus, a first meta tag with a first set of commands relates to pre-defined and strict rules, which may be rules of a so-called "Context Free Grammar".

The second set of commands is specified by at least one second meta tag using a link to a set of commands determined by a machine learning algorithm for extracting second relevant text information based on the specified text information. Thus, a second meta tag with a second set of commands relates to rules that have been acquired using a machine learning algorithm or so-called "artificial intelligence". In other words, the second set of commands is determined by a machine learning algorithm that automatically determines rules and corresponding commands for extracting relevant information from the converted document. The logic on which the machine learning algorithm is based, may be determined as one or more training sessions using annotated data.

By using a second set of commands that is generated by a machine learning algorithm, the second set of commands may be updated by training the machine learning algorithm using an updated set of training data, such as a set of medical reports annotated by a new member in a team of medical doctors. This means that medical reports by a medical doctor that uses another language by other members of the team of medical doctors may be searched for relevant text information using the present method by merely updating the machine learning algorithm with a new set of annotated training data.

Since the machine learning algorithm is merely used to determine commands that are used to extract relevant information from a particular text document, the machine learning algorithm as such is not needed to carry out the present method.

However, the second set of commands according to the present method may link to rules or results determined by the machine learning algorithm. Alternatively, the machine learning algorithm may be part of, i.e. may be implemented in the second set of commands specified in a second meta tag.

In a generating step 109, a document comprising the extracted relevant text information according to the specified text information for each pattern is generated.

In a presenting step 111, the document generated in generating step 109 is presented on an output unit.

In Fig. 2, a pattern 200 is shown.

The pattern 200 is called "AGEPHRASE" and specifies text information to be extracted from a textual document. The specified text information comprises "NUMBER", "TIME", and "OLD" or "AGE", "NUMBERS" or "NUMBER", "TIME", and "GENDER". The pattern 200 specifies rules for extracting relevant information with respect to the specified text information "AGE" as words of the following list of words: "age", "alter, "leeftijd".

The pattern 200 specifies rules for extracting relevant information with respect to the specified text information "OLD" as words of the following list of words: "old", "o", "alt", "oud", ".".

The pattern 200 specifies rules for extracting relevant information with respect to the specified text information "TIME" as words of the following list of words: "year", "y", "years", "jahriger", "yr", "months", "yo", "jahre", "jaar", "/", "-", "." and a first meta tag 201 "LOAD_MORE".

The first meta tag 201 comprises a set of commands that add similar words to the specified list of words.

The pattern 200 specifies rules for extracting relevant information with respect to the specified text information "NUMBER" as words of the following list of words: "100", "number" and a second meta tag 203 "LOAD_SUPERVISED_FEATURE". In this context, the "numbers" or any other features may be numerical or verbal.

The second meta tag 203 loads commands to extract text information according to a pre-trained word list, i.e. a list of words that has been determined using a machine learning algorithm that has been trained on annotated training data for the specified text information "NUMBER".

The pattern 200 specifies rules for extracting relevant information with respect to the specified text information "GENDER" as words of the following list of words: "mann" and a meta tag 205 "LOAD_PATTERN".

The meta tag 205 loads another pattern comprising commands that specify rules for information to be extracted. The other pattern may comprise meta tags and/or rules for extracting particular relevant information with respect to a specific specified text information to be extracted.

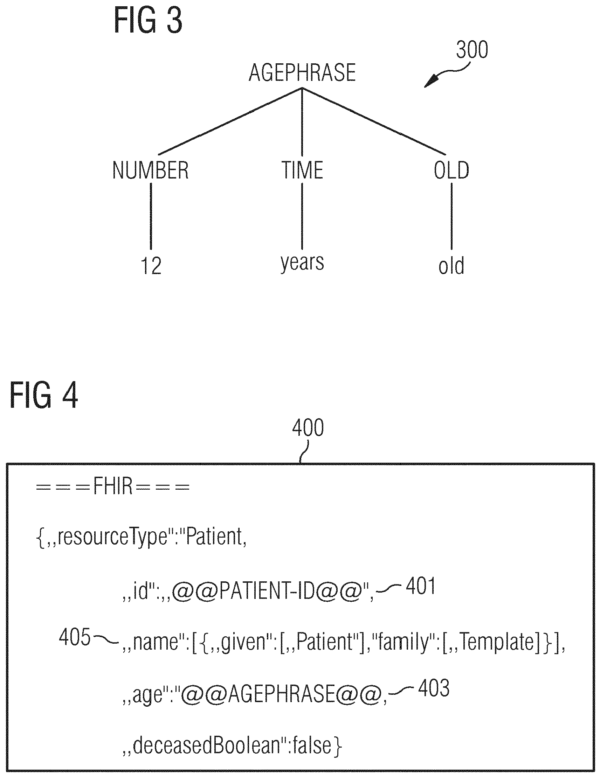

In Fig. 3 as result 300 of an algorithm comprising the pattern 200 as shown in Fig. 2 is shown.

The result 300 comprises the words "12", "years" and "old" for the pattern AGEPHRASE, wherein "12" has been identified as being relevant text information to be extracted for the specified text "NUMBER" using commands that have been determined using a machine learning algorithm.

The word "years" has been identified as being relevant text information to be extracted for the specified text "TIME" using a strict pre-determined word-alternative.

The word "old" has been identified as being relevant text information to be extracted for the specified text "OLD" using a strict pre-determined word-alternative.

Fig. 4 shows a template 400 for generating a textual document using information extracted from a text according to a first pattern 401 "PATIENT-ID" and the pattern 200 "AGEPHRASE" as described with respect to FIG. 2.

The template 400 further comprises strict commands 403 and 405, which specify textual information to be included via pre-determined words to be extracted and text to be inserted.

By carrying out the template 400 using a parser, for example. A document is generated including the information specified in the template 400 in a standardized form.

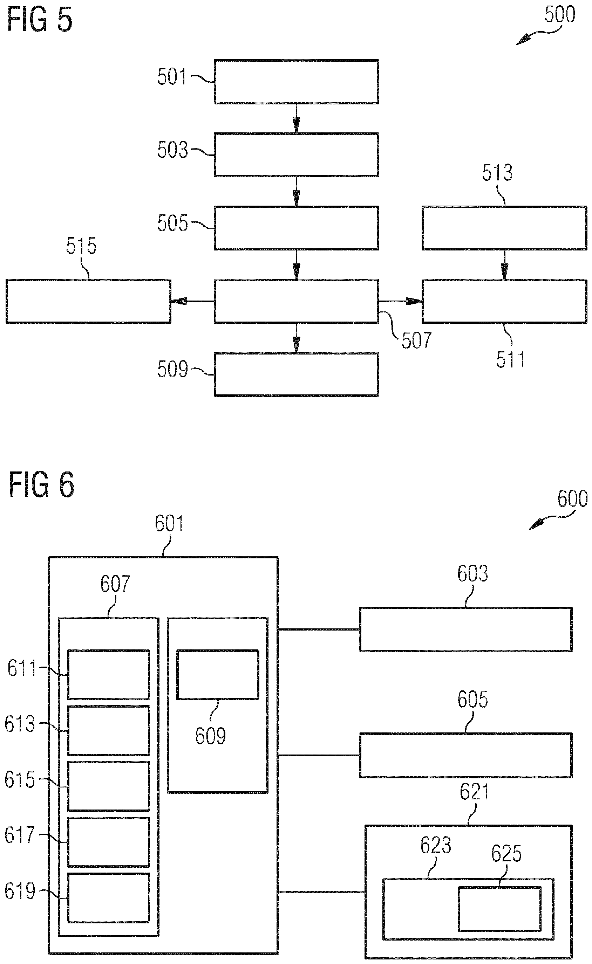

In Fig. 5, a flow chart 500 for generating a document in a standardized form is shown.

The process starts in a first step 501 with meta-grammar, which is a formal grammar that describes a set of possible grammars.

In a second step 503, the meta grammar is expanded using commands determined by at least one machine learning algorithm.

In a third step 505, a parser 507 is generated for parsing information extracted from particular textual documents, based on the expanded grammar.

In a fourth step 509 a text form 511 is generated based on a normalized text 513, which has been generated from an input text 515 using the parser 507 and a format template 517.

FIG. 6 is a block diagram illustrating an exemplary system 600. The system 600 includes a computer system 601 for implementing the method as described herein.

In some implementations, computer system 601 operates as a standalone device. In other implementations, computer system 601 may be connected, by using a network for example, to other machines, such as a scanner 603 or a cloud server 605.

In a networked deployment, computer system 601 may operate in the capacity of a server, which may be a thin-client server, such as Syngo® by Siemens Healthineers, for example, a client user machine in a server-client user network environment, or as a peer machine in a peer-to-peer or a distributed network environment.

In one implementation, computer system 601 includes a processor device or central processing unit (CPU) 607 coupled to one or more non-transitory computer-readable media 609, which may be a computer storage or memory device.

Computer system 601 may further include support circuits such as a cache, a power supply, dock circuits and a communications bus.

The present technology may be implemented in various forms of hardware, software, firmware, special purpose processors, or a combination thereof, either as part of the microinstruction code or as part of an application program or software product, or a combination thereof, which is executed via the operating system.

In one implementation, the techniques described herein are implemented as computer-readable program code tangibly embodied in one or more non-transitory computer-readable media 609. Non-transitory computer-readable media 609 may include random access memory (RAM), read-only memory (ROM), magnetic floppy disk, flash memory, and other types of memories, or a combination thereof. The computer-readable program code is executed by CPU 607 to process data provided by a data source.

In particular, the present techniques may be implemented by a receiving unit 611 configured for receiving free text documents from the memory, a user interface 613 configured for specifying text information to be extracted from the free text document by a user, an extraction unit 617 configured for extracting relevant text information from the converted document using at least one pattern comprising commands that identify the relevant text information to be extracted from the converted document based on the specified text information, wherein the commands are specified by at least one first meta tag as a rule-based system for extracting first relevant text information, and wherein the commands are specified by at least one second meta tag using a link to a set of commands determined by a machine learning algorithm for extracting second relevant text information based on the specified text information, a generic unit 619 configured for generating a document comprising the extracted relevant text information according to the specified text information for each pattern, and an output unit 621 configured for presenting the document comprising the specified text information according to the extracted relevant text information.

Optionally, the system comprises a conversion unit (615) configured for converting each word of a free text document into word embeddings comprising a vector representing the word in a multidimensional space, for classification purposes. These classifiers may be used for finding similar words, i.e. for similarity purposes.

In some examples, the system may comprise a graphical user interface 623 for obtaining a string of characters, wherein the graphical user interface 623 comprises at least one control symbol 625 for carrying out a scan process for scanning hand written information and to convert the hand written information into the free text document. Alternatively, or additionally, plain text may be used as input as well. The graphical user interface 623 may be provided on the output unit 621, which may be a display device, for example.

It is to be further understood that, because some of the constituent system components and method steps depicted in the accompanying figures can be implemented in software, the actual connections between the systems components or the process steps may differ depending upon the manner in which the present method is programmed.
Given the teachings provided herein, one of ordinary skill in the related art will be able to contemplate these and similar implementations or configurations of the present method.

### Reference number list

- 100: first flow chart
- 101: receiving step
- 103: specification step
- 105: conversion step
- 107: extraction step
- 109: generating step
- 111: presenting step
- 200: pattern
- 201: first meta tag
- 203: second meta tag
- 205: meta tag
- 300: result
- 400: template
- 401: first pattern
- 403: strict commands
- 405: strict commands
- 500: flow chart
- 501: first step
- 503: second step
- 505: third step
- 507: parser
- 509: text form
- 511: normalized text
- 513: input text
- 515: format template
- 600: system
- 601: computer system
- 603: scanner
- 605: cloud server
- 607: central processing unit
- 609: non-transitory computer-readable media
- 611: receiving unit
- 613: user interface
- 615: conversion unit
- 617: extraction unit
- 619: generic unit
- 621: output unit
- 623: graphical user interface
- 625: control symbol

## Claims

1. A computer-implemented method for extracting relevant text information from a text document,
wherein the method comprises configuring a processor (607) of a computer system (601) to carry out the following steps:
receiving (101) a free text document (515), specifying (103) text information to be extracted from the free text by a user,
extracting (107) relevant text information from the converted document using at least one pattern (200) comprising commands that identify the relevant text information to be extracted from the converted document based on the specified text information,
wherein a first set of commands is specified by at least one first meta tag (201) as a rule-based system for extracting first relevant text information, and
wherein a second set of commands is specified by at least one second meta tag (203) using a set of commands determined by a machine learning algorithm for extracting second relevant text information based on the specified text information,
generating (109) a document comprising the extracted relevant text information according to the specified text information for each pattern, and
presenting (111) the document comprising the extracted relevant text information on an output unit (621).

2. The method according to claim 1,
wherein the machine learning algorithm is a pre-trained machine learning algorithm that has been trained using training data comprising:
a number of input words;
a number of word embeddings associated with a respective one of the number of input words, each word embedding comprising a vector representing the respective one of the number of input words in the multidimensional space; and
a number of ground truth labels, wherein each ground truth label is associated with a respective one of the number of input words, and each ground truth label indicates an association of the respective input word with a given class representing the specified text information.

3. The method according to claim 1 or 2,
wherein the commands specified by the at least one first meta tag (201) are commands for stemming and/or lemmatization of the specified text information.

4. The method according to any of the previous claims,
wherein the commands specified by the at least one first meta tag (201) comprise a pre-determined list of similar text information for the specified text information for identification of the relevant text information.

5. The method according to any of the previous claims,
wherein the commands determined by the machine learning algorithm comprise a pre-trained word list determined in a previous training for the specified text information.

6. The method according to any of the previous claims,
wherein the at least one first meta tag (201) specifies a command to generalize every word out of the free text to a canonical word token according to the specified text information.

7. The method according to any of the previous claims,
wherein the document comprising the specified text information according to the extracted relevant text information is transmitted to an automatic search algorithm that displays the comprising the specified text information according to the extracted relevant text information in response to a search command comprising the text information to be extracted from the free text, provided by a user.

8. The method according to any of the previous claims,
wherein converting the free text document into word embeddings is carried out by a set of commands specified by the at least one first meta tag (201) and/or by the at least one second meta tag (203).

9. The method according to any of the previous claims,
wherein a parse tree is generated based on the extracted relevant text information, wherein the parse tree comprises the extracted relevant text information according to all commands of a particular pattern (200).

10. The method according to any of the previous claims,
wherein generating the document comprises automatically incorporating the extracted relevant text information into a text template (517) at a pre-determined position in the text template (517).

11. The method according to any of the previous claims,
wherein the at least one pattern (200) comprises a command that loads at least one pre-determined pattern comprising at least one meta tag (201, 203).

12. The method according to any of the previous claims,
wherein the method comprises obtaining the specified text information according to the extracted relevant text information label via a graphical user interface (623).

13. The method according to any of the previous claims,
wherein a particular pattern (200) comprises at least one sub-pattern, each sub-pattern comprising at least one first meta tag (201) and/or at least one second meta tag (203) .

14. A system (600) comprising a processor (607) and a memory (605),
wherein the memory (605) comprises a computer program comprising instructions, which when the program is executed by the processor (607), cause the processor (607) to carry out the steps according to the method of any of claims 1 to 13, wherein the system comprises:
a receiving unit (611) configured for receiving free text documents from the memory,
a user interface (613) configured for specifying text information to be extracted from the free text document by a user,
an extraction unit (617) configured for extracting relevant text information from the converted document using at least one pattern (200) comprising commands that identify the relevant text information to be extracted from the converted document based on the specified text information,
wherein the commands are specified by at least one first meta tag (201) as a rule-based system for extracting first relevant text information, and
wherein the commands are specified by at least one second meta tag (203) using a link to a set of commands determined by a machine learning algorithm for extracting second relevant text information based on the specified text information,
a generic unit (619) configured for generating a document comprising the extracted relevant text information according to the specified text information for each pattern,
an output unit (621) configured for presenting the document comprising the specified text information according to the extracted relevant text information.

15. A computer readable medium (609) having instructions stored thereon which, when executed by a computer (601), cause the computer (601) to perform the method according to any of claims 1 to 13.
